# EUROPEAN PATENT APPLICATION

(11) **EP 4 656 850 A1**
(43) Date of publication of application: **03.12.2025**
(21) Application number: 25178942.6
(22) Date of filing: 27.05.2025
(51) Int. Cl.: F01M 13/00, F01M 13/02, F02M 35/10

(54) **ENGINE SYSTEM PROVIDED WITH A SENSOR TO IDENTIFY LEAKAGE FROM A CIRCUIT FOR THE RECOVERY AND RECIRCULATION OF OIL VAPORS**

(30) Priority: 31.05.2024 IT 202400012466
(71) Applicant: FERRARI S.p.A., 41100 Modena (IT)
(72) Inventor: LAMBERTI, Luca, 41100 MODENA (IT); ROSSI, Luca, 41100 MODENA (IT); VARISCO, Luca, 41100 MODENA (IT); PEDERZOLI, Federico, 41100 MODENA (IT); TONELLI, Roberto, 41100 MODENA (IT)
(74) Representative: Studio Torta S.p.A.

(57) **Abstract**

An engine system (20) having an internal combustion engine (21) that receives combustion air from an intake duct (26), and a tank (22) for the oil, having an accumulation zone (25) for gases containing oil vapors; the engine system (20) also has a blow-by circuit (30) provided with at least one pipe (31) connecting the accumulation zone (25) with the intake duct (26); at the same time, a sensor (41) detects the pressure in the blow-by circuit (30), and an electronic control unit (42) evaluates the pressure detected to indicate the presence of oil vapor leakage from the blow-by circuit (30); the blow-by circuit (30) has an adjustment valve (45), which is arranged between the sensor (41) and the intake duct (26), and is configured to have a passageway (56) with an area that is automatically reduced in response to the underpressure caused by the engine (21) during use.

## Description

### Cross-reference to related applications

This patent application claims priority from Italian patent application no. 102024000012466, filed on May 31, 2024, the entire disclosure of which is incorporated herein by reference.

### Technical field

The present invention relates to an engine system that includes an internal combustion engine, a circuit for the recovery and recirculation of oil vapors, also commonly known as a blow-by circuit, and a sensor used to indicate the presence of oil vapor leakage from said circuit.

### Context

As known, internal combustion engines are provided with a blow-by circuit to recover the vapors of the lubrication oil, which are suspended in the gases that leak through the gaskets of the engine pistons. In particular, the blow-by circuit includes pipes arranged so as to make those gases recirculate in the combustion air intake duct, in order to introduce them once again into the combustion chambers of the engine. Generally speaking, gases with oil vapors accumulate in an upper zone of the tank containing the lubricant oil, and said zone is connected with the intake duct.

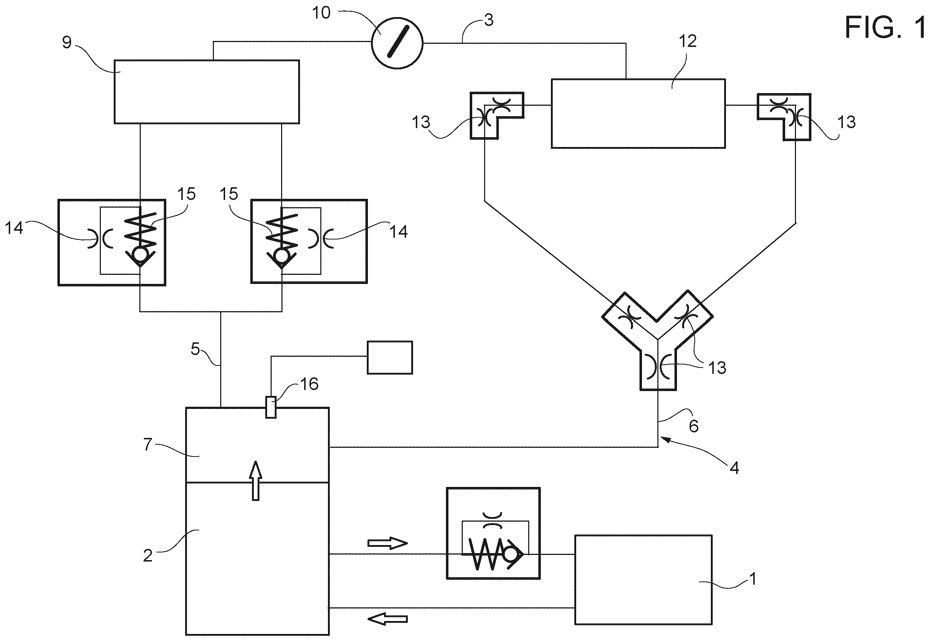

For example, the solution shown schematically in Figure 1 comprises an engine 1, of the naturally aspirated type (i.e. not supercharged), which is provided with a tank 2 for the lubricant oil, an intake duct 3 for the combustion air, and a blow-by circuit 4, having two pipes 5 and 6 to connect an upper zone 7 of the tank 2 (where the oil vapors accumulate) to the intake duct 3. In particular, the pipe 5 connects the upper zone 7 of the tank 2 with a sleeve 9 arranged along the intake duct 3 upstream of a valve 10 (for example, a butterfly valve) provided to regulate the flow rate of combustion air entering the engine 1; the pipe 6, on the other hand, connects the upper zone 7 of the tank 2 with an air manifold 12 mounted on the engine head 1 at the end of the intake duct 3, i.e. immediately upstream of the intake valves of the engine 1. In particular, the pipe 6 has properly reduced cross-sections, or throttlings, indicated generically by reference number 13, with a fixed diameter calibrated to define the flow rate that is drawn into the air manifold 12. The pipe 5 is also provided with throttlings, indicated with reference number 14, with calibrated diameter, arranged in parallel with respective check valves 15, to ensure that an airflow, of relatively small size, can flow from the sleeve 9 towards the upper zone 7 of the tank 2, for example when the engine 1 operates at minimal loads. If this small airflow through the pipe 5 were not to be provided, the underpressure in the upper zone 7 of the tank 2 could be excessive, with possible malfunctions of the engine 1.

As known, furthermore, certain jurisdictions (for example, the US one) require the conditions of the blow-by circuit 4 to be monitored, in order to identify any leakage of gas into the atmosphere, in order to ensure that maintenance is performed promptly and thus avoid environmental pollution by the oil vapors.

For this purpose, the solution of Figure 1 includes a pressure sensor 16 arranged so as to detect the (negative) pressure in the upper zone 7 of the tank 2. A possible increase in that pressure above a predefine threshold (for example, an increase of around 40 mbar), becomes an indicator of the fact that the blow-by circuit 4 is subject to an undesired leak of gas into the atmosphere. This anomaly, identified on the basis of detection of the pressure, is communicated to the driver by a corresponding alarm signal, for example by a corresponding lit warning lamp on the control panel in the passenger compartment.

In practice, the threshold that triggers this alarm can vary based on various factors, for example the operating conditions of the engine, the cross-sections of the passageway in the pipe 6, etc., and is defined in the design phase, for example by appropriate simulation models.

In experiments, it has been noted that this solution is not always satisfactory, since it sometimes gives unreliable alarm signals. In other words, the pressure monitoring sometimes gives an alarm signal even when, in actual fact, there is no leakage from the blow-by circuit 4.

This drawback is essentially due to factors that are not envisaged in the aforesaid models, for example it can be due to possible dispersions in the pipes, to production tolerances for internal diameters of the pipes of the blow-by circuit, to fluctuations in pressure inside the air manifold and in the intake duct, etc.

There is therefore a need to eliminate this problem, i.e. to obtain alarm signals that are reliable insofar as concerns the seal of the blow-by circuit.

### Summary of the invention

The object of the present invention is to meet the need stated here above, by a solution that is relatively simple and economical.

According to the present invention, an engine system provided with a sensor to identify any leakage from a circuit for recovery and recirculation of oil vapors is provided, as defined in the appended claim 1.

At the same time, the appended dependent claims define particular embodiments of the present invention.

### Brief description of the drawings

For a better understanding of the present invention, preferred and non-limiting embodiments are described below, by way of example, with reference to the appended drawings, in which:
- Figure 1 is a diagram of the embodiment that has been summarily described above;
- Figure 2 is a similar diagram to Figure 1 and shows a preferred embodiment of the engine system provided with a sensor to identify any leakage from a circuit for recovery and recirculation of oil vapors, according to the present invention;
- Figure 3 shows, in transverse cross-section and with schematised parts, an adjustment valve installed in the engine system of Figure 2, in a configuration corresponding with a switched-off engine; and
- Figure 4 is similar to Figure 3 and shows the adjustment valve when the engine is in operation.

### Description of preferred embodiments

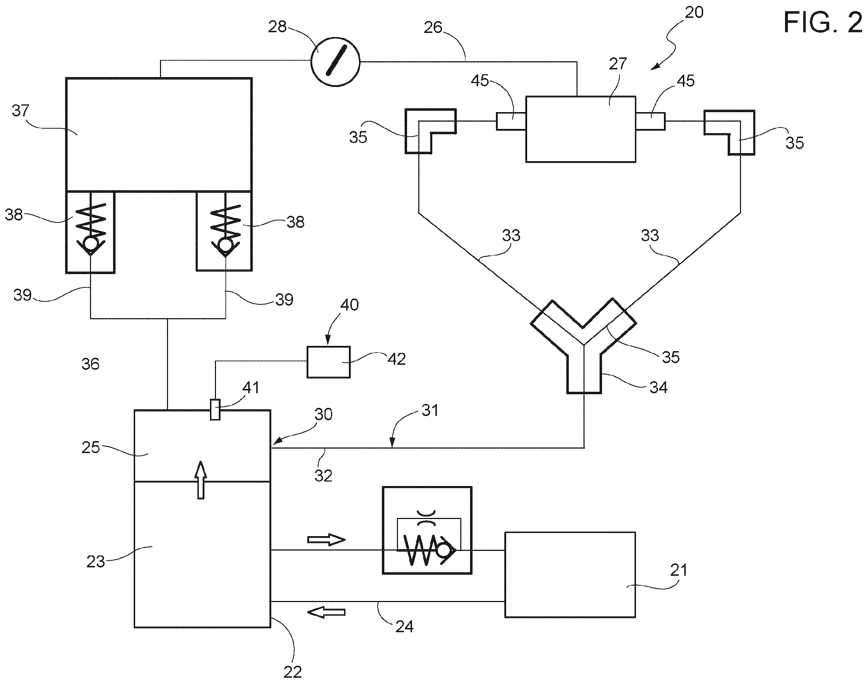

With reference to what is shown schematically in Figure 2, the reference number 20 refers to an engine system for a vehicle, not shown, in particular for a motor vehicle. The engine system 20 comprises an internal combustion engine 21 and a tank 22 for lubricant oil. The tank 22 has a lower zone 23 that contains the lubricant oil in the liquid state, and is connected to the engine 21 by a lubrication system 24, partially shown and not described in detail. The tank 22, then, has an upper zone 25, designed to receive a gas that contains oil vapors and that comes, for example, from a crankcase of the engine 21, in a known way and not shown.

The engine system 21 further comprises an intake duct 26 having, at one end thereof, an air manifold 27, which is coupled to a head of the engine 21 in a known manner and not described in detail, in order to convey a flow of combustion air towards the cylinders (not shown) of the engine 21 through corresponding intake valves (not shown). A valve 28 is provided along the intake duct 26, for example a butterfly valve, controlled in a known way in response to an acceleration command to regulate the flow rate of combustion air entering into the cylinders of the engine 21. In particular, the engine 21 is the naturally aspirated type, i.e. without a compressor along the intake duct 26, but the present invention can also be applied to supercharged engines, as will also be explained below.

The engine system 20 further comprises a circuit for the recovery and recirculation of the oil vapors, or blow-by circuit, indicated with reference number 30 and comprising at least one pipe 31 that connects the upper zone 25 of the tank 22 with the intake duct 26. In particular, the pipe 31 comprises a branch 32 connected, fluid-tight, to the upper zone 25 of the tank 22 and, at the opposite end, a branch 33 connected fluid-tight to an intake zone between the valve 26 and the engine 21. More in particular, the branch 33 is connected to the air manifold 27. In more detail, the pipe 31 comprises two branches 33 that depart from the branch 32, through a fitting 34 of the three-way type, so as to be parallel to each other, and are connected fluid-tight to respective air manifolds 27 according to a configuration that is suitable for double-bank engines, for example to engines with six cylinders arranged in a V shape.

In general, the pipe 31 can be provided with fittings 35, which preferably have a higher cross-section than the calibrated passageways of the throttlings 13 of the embodiment of Figure 1.

Preferably, the blow-by circuit 30 also comprises a pipe 36, which is separate from the pipe 31 and connects the upper zone 25 of the tank 22 to a sleeve 37, which forms part of the intake duct 26 and is arranged upstream of the valve 28 (considering the flow of combustion air). The pipe 36 comprises at least one check valve 38 configured to prevent the combustion air from flowing towards the upper zone 25 of the tank 22 (but leaving the gas with the oil vapors to flow into the sleeve 37).

Preferably, the check valve 38 is mounted directly on the sleeve 37, i.e. it is arranged at one end of the pipe 36. In the specific example shown, the pipe 36 ends with two branches 39, which are arranged in parallel with each other, are coupled fluid-tight to the sleeve 37 and are provided with respective check valves 38.

The engine system 20 further comprises a monitoring and alarm unit 40, to identify any leakage of gas from the blow-by circuit 30. The unit 40 comprises: a pressure sensor 41 mounted at the upper zone 25 of the tank 22 (or at the pipe 31 or 36, according to variants not shown) to detect and monitor the (negative) internal pressure in the blow-by circuit 30; and an electronic control unit 42, which receives a pressure signal from the sensor 41 and evaluates whether the pressure detected (or a detected increase in pressure) is higher than a given threshold, established in design, indicative of the fact that the blow-by circuit 30 has presumably lost its optimal seal conditions and, therefore, has a leak of gas into the atmosphere, i.e. towards the outside environment. If that threshold is exceeded, the electronic control unit 42 is configured to intervene, providing a corresponding alarm signal to a dashboard of the vehicle on which the engine system 20 is mounted. The threshold at which the electronic control unit 42 intervenes to provide the alarm signal can vary as a function of the operating conditions of the engine 21, for example as a function of the (negative) pressure value in the air manifold 27.

According to the present invention, the blow-by circuit 30 comprises, furthermore, an adjustment valve 45, which is arranged along the pipe 31 (between the sensor 41 and the intake duct 26), and is configured to introduce a throttling having a variable passageway cross-section, which is adjusted automatically as a function of the effective value of the underpressure produced by the engine 21. The throttling defined by the valve 45 introduces a pressure difference that alters the pressure detected by the sensor 41 in the blow-by circuit 30 and is also variable based on the value of the underpressure produced by the engine 21.

In particular, the blow-by circuit 30 comprises two valves 45, each arranged at a respective branch 33.

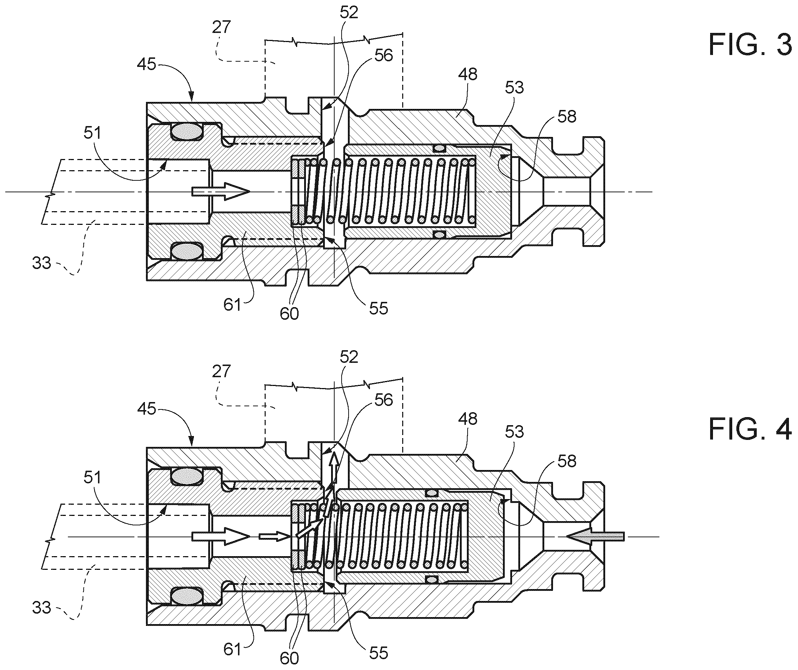

Figure 3 relates to a preferred construction example of the valve 45, shown in a configuration in which the engine 21 is switched off (i.e. the engine 21 does not produce any underpressure in the air manifold 27 and in the intake duct 26).

The valve 45 comprises a valve body 48 having an inlet port 51, which communicates permanently with the part of the blow-by circuit 30 where the sensor 41 is mounted, and therefore a pressure that is correlated directly to the one that the sensor 41 itself detects.

The valve body 48 also has an outlet port 52 which communicates permanently with the air manifold 27 and with the intake duct 26, and an opening that communicates directly and permanently with the atmosphere.

Preferably, the valve 45 is arranged at the end of the pipe 31, so the outlet mouth 52 is coupled fluid-tight to the air manifold 27, in particular without providing for intermediate pipes. In this manner, the pressure detection by the sensor 41 allows the seal of the entire pipe 31 (and not only the seal on a part thereof) to be monitored.

The valve 45 comprises a shutter 53, which is movable in the valve body 48 away from and towards a valve seat 55, so as to adjust the width of the area or cross-section of a passageway 56 that is provided between the ports 51 and 52, under the opposing thrusts of the atmospheric pressure and a pressure indicative of the one present at the port 51, and under the thrust of an properly calibrated spring 57. The spring 57 is arranged to act in the opposite direction to the atmospheric pressure and to the valve seat 55, so it tends to maintain the passageway 56 completely open. In particular, with the engine switched off, the pressure at the ports 51 and 52 and in the passageway 56 is equal to the atmospheric one, and the spring 57 has a preload that pushes the shutter 53 against an end-stop shoulder 58, with which the maximum width of the passageway 56 corresponds.

With reference to Figure 4, when the engine 21 is in operation, it produces an intake that reduces the pressure in the valve body 48: in these conditions, the pressure at the port 52 is determined directly by the intake of the engine 21 and, due to the underpressure, the shutter 53 moves axially towards the valve seat 55, with respect to the position of Figure 3, compressing the spring 57, up until it finds a new position of equilibrium. With this movement, the shutter 53 reduces the width of the passageway 56, so it introduces a throttling, and therefore a pressure difference. In other words, the (negative) pressure at the port 51 will be higher than the pressure present at the port 52.

When the underpressure produced by the engine 21 intensifies (i.e. the pressure in the port 52 decreases further), the shutter 53 continues to move towards the valve seat 55 to further compress the spring 57 and reduce even further the area of the passageway 56. In this manner, the extent of the throttling and, therefore, the pressure difference at the passageway 56 vary based on the extent of the underpressure produced by the engine 21.

In practice, introduction of the valve 45 has two effects.

In the first place, the variable throttling at the passageway 56 allows filtering of the (negative) pressure values detected by the sensor 41 with respect to the trend of the underpressure produced by the engine 21. In other words, the pressure detection of the sensor 41 is less sensitive to the fluctuations in pressure naturally present in the intake duct 25 and in the air manifold 27, with respect to the solution of Figure 1, which has no valve 45.

In the second place, it is possible to size the area or cross-section of the passageway 56 so that it corresponds with the value of the minimum area along the entire pipe 31. In other words, the diameters of the fittings 35 and the other parts of the pipe 31 are calibrated in a manner to define larger cross-sections than the minimum area of the passageway 56, i.e. without any throttling or narrowing if compared with the passageway 56. Therefore, as mentioned above, the throttlings 13 with calibrated diameter of Figure 1 are not necessary.

In this manner, the (negative) pressure value in the upper zone 25 of the tank 22 is regulated by the action of the valve 45, in the various operating regimes of the engine 20. Consequently, the flow rate of gas that flows into the pipe 31 depends exclusively on the width of the passageway 56, corresponding with the minimum area of the pipe 31, and is therefore insensitive to any production tolerances of the internal diameter in the other parts of the pipe 31.

These effects allow a more reliable correlation between the measurement of pressure by the sensor 41 and the presence of defects in the seal of the blow-by circuit 30. In particular, the (negative) pressure values detected by the sensor 41 have a lower dispersion and therefore a lower control error.

Introduction of the valve 45 allows an additional advantage to be obtained, i.e. the possibility of eliminating the throttlings 14 that were necessary in the solution of Figure 1 to avoid the pressure in the upper zone 7 of the tank 2 reaching excessively low values. In fact, in the solution of Figure 2, the valve 45 introduces a relatively large pressure difference at the passageway 56, which limits the underpressure inside the upper zone 25 of the tank 22, for example when the engine 21 operates at minimum loads, so the (negative) pressure value in the upper zone 25 is reasonably acceptable for correct operation of the engine 21, even without bleeding combustion air from the sleeve 37. Consequently, in the first place, the number of components is reduced, since it is not necessary to provide for and calibrate any bypass hole to be arranged in parallel with the check valves 38, in order to by-pass them. In the second place, in use, the combustion air that arrives at the engine 21 flows entirely through the valve 28 (without bleeding through the pipe 36, as said), so its flow rate is measured precisely by the usual detection systems (not shown) that are provided at the valve 28 itself to then control operation of the engine 21.

At the same time, the seal is monitored for the entire blow-by circuit 30, from the check valves 38 to the valves 45, in each operating condition.

As mentioned above, it is also possible to apply the valve 45 to solutions with a supercharged engine, i.e. to solutions provided with a compressor (not shown) along the intake duct downstream of the sleeve 37. The known solutions of the supercharged type normally already have at least one check valve along the blow-by pipe that connects the upper zone of the oil tank to the air manifold (i.e. along the pipe 31, considering Figure 2, and along the pipe 6, considering Figure 1), in order to prevent the combustion air from flowing towards the oil tank when the air manifold is placed under pressure by the compressor. With reference to Figure 2, arranging a check valve along the pipe 31, the gas containing the oil vapors is recirculated from the upper zone 25 of the tank 22 into the intake duct 26 through the pipe 36 (upstream of the compressor) when the air manifold 27 is placed under pressure during supercharging.

In any case, if the engine 21 is of the naturally aspirated type (and therefore the air manifold 27 cannot have a pressure higher than the atmospheric one), the pipe 36 is not strictly necessary, so it could theoretically be eliminated; however, it is equally advisable to install the pipe 36, in order always to have an alternative of recovery and recirculation of the blow-by gases if the valve 45 has a malfunction or is obstructed.

According to a variant not shown, the valve 45 can comprise an end-stop shoulder, separate from the valve seat 55, to define the maximum compression of the spring 57 and therefore a minimum area (different to zero) for adjustment of the passageway 56.

According to the preferred embodiment shown in Figures 3 and 4, the preload of the spring 57 can advantageously be adjusted by introducing one or more spacers 60, of properly calibrated thickness, axially in series with respect to the spring 57, during assembly of the valve 45. In particular, the spacers 60 are defined by rings that are coaxial to the spring 57 and to the shutter 53. More in particular, the spacers 60 are arranged between the spring 57 and a bushing 61 that is coupled in a fixed position and fluid-tight in the valve body 48 and defines the port 51.

Based on what is stated above, the advantages of the solution of Figure 2 with respect to the solution of Figure 1 are clear.

In particular, as indicated above, the valve 45 is capable of compensating for the pressure measurement dispersions due to variations in the flow rate in the blow-by circuit 30, to variations in the geometrical dimensions of the components, to variations in pressure of the air manifold 27, thus drastically reducing the risk of false alarm signals.

In particular, the pressure in the upper zone 25 of the tank 22 becomes more stable from engine to engine, and between different operating points of the same engine.

Furthermore, the valve 45 is a sturdy solution insofar as concerns the measurement requirements; in fact, in the case of leakage into the atmosphere from the blow-by circuit 30, the difference in pressure in the upper zone 25 of the tank 22 with respect to the standard seal condition (i.e., without leakage) is higher and easier to detect with precision with respect to the solution of Figure 1.

Furthermore, the pipe 36 no longer needs calibrated holes in parallel with the check valves 38, with the consequent advantages described here above.

It is clear that changes and variants can be made to the engine system described with reference to Figure 2 without thus deviating from the scope of protection of the present invention, as defined in the appended claims.

In particular, the blow-by circuit 30 could include a different number of pipes, with respect to what is described in reference to the preferred embodiment shown in Figure 2, to connect the upper zone 25 of the tank 22 to the intake duct 26; and/or the sensor 41 could be mounted in a different position with respect to what is indicated by way of example.

## Claims

1. Engine system (20) comprising:
- an internal combustion engine (21);
- an intake duct (26) for conveying a flow of combustion air to said engine (21);
- a tank (22) having an accumulation zone (25) for gases containing oil vapors;
- a circuit (30) for the recovery and recirculation of oil vapors, the circuit (30) comprising at least one pipe (31) connecting said accumulation zone (25) with said intake duct (26);
- a sensor (41) arranged so as to send a signal indicative of the pressure in said circuit (30);
- an electronic control unit (42) configured to evaluate the sensor signal to indicate the presence of oil vapor leakage from said circuit (30);
**characterized in that** said circuit (30) comprises an adjustment valve (45), which is arranged along said pipe (31), between said sensor (41) and said intake duct (26), and is configured to have a passageway (56) with an area that is automatically reduced in response to a underpressure caused by said engine (21) during use.

2. The engine system according to claim 1, wherein said adjustment valve (45) is arranged at one end of said pipe (31) at said intake duct (26).

3. The engine system according to claim 2, wherein said intake duct (26) ends with an air manifold (27), mounted on said engine (21); and wherein said adjustment valve (45) is mounted on said air manifold (27).

4. The engine system according to any one of the preceding claims, wherein said adjustment valve (45) comprises a movable shutter for varying the area of said passageway (26), in response to said underpressure, to said atmospheric pressure and to the thrust of a spring (57) having a given preload.

5. The engine system according to claim 4, wherein said shutter is configured to progressively reduce the area of said passageway (56) and progressively compress said spring (56) as the pressure difference between said underpressure and said atmospheric pressure increases.

6. The engine system according to claim 4 or 5, wherein said adjustment valve (45) has an inlet port (51) in communication with said pipe (31), an outlet port (52) in communication with said intake duct (26), and an opening in communication with the atmosphere.

7. The engine system according to any one of claims 4 to 6, wherein said adjustment valve (45) comprises one or more spacers, coupled to said spring (57); and wherein said preload is adjustable by varying number and/or thickness of said one or more spacers.

8. The engine system according to claim 7, wherein said one or more spacers are arranged between said spring (57) and a bushing defining said inlet port (51).

9. The engine system according to any one of the preceding claims, wherein said sensor (41) is mounted on said tank (22) at said accumulation zone (25).

10. The engine system according to any one of the preceding claims, wherein said circuit (30) comprises an additional pipe (36), which connects said accumulation zone (25) with said intake duct (26) and is arranged in parallel with said pipe (31).

11. The engine system according to claim 10, wherein said further pipe (36) is coupled to said intake duct (26) in a position that is upstream of a valve (28) controlled to adjust combustion air flow; and wherein said further pipe (36) comprises at least one check valve (38) configured to prevent combustion air from flowing in said further pipe (36) towards said accumulation zone (25).

12. The engine system according to claim 11, wherein said check valve (38) is devoid of bypass passages in said further pipe (36), so that combustion air flows, in use, towards said engine (21) completely through said valve (28).

13. The engine system according to claim 11 or 12, wherein said check valve (38) is arranged at one end of said further pipe (36), at said intake duct (26).

14. The system according to claim 13, wherein said check valve (38) is mounted on a sleeve defining part of said intake duct (26).
